# EUROPEAN PATENT APPLICATION

(11) **EP 2 180 156 A1**
(43) Date of publication of application: **28.04.2010**
(21) Application number: 08425691.6
(22) Date of filing: 24.10.2008
(51) Int. Cl.: F01N 3/20

(54) **Injection system for injecting a reducing substance into an exhaust system of an internal combustion engine**

(71) Applicant: Magneti Marelli Powertrain S.p.A., 28011 Corbetta (IT)
(72) Inventor: Osbat, Giovanni, 48025 Riolo Terme (IT); Cominetti, Paolo, 40137 Bologna (IT)
(74) Representative: Maccagnan, Matteo

(57) **Abstract**

An injection system (8) for injecting a reducing substance into an exhaust system (2) of an internal combustion engine; the injection system (8) has: a connecting tube (16), which is adapted to allow a flow of exhaust gas therein, is arranged upstream of the catalytic system (7), and forms a part of an exhaust pipe (3) which originates from an exhaust manifold (4) of an internal combustion engine (2); and an injector (12), which is coupled with the connecting tube (16) for injecting an additive into the connecting tube (16) itself through a through feeding aperture (17) obtained through a side wall (18) of the connecting tube (16); the connecting tube (16) has a reduction of its cross section for introducing exhaust gases at the through feeding aperture (17) obtained through the side wall (18) of the connecting tube (16).

## Description

### TECHNICAL FIELD

The present invention relates to an injection system for injecting a reducing substance into an exhaust system of an internal combustion engine provided with exhaust gas post-treatment.

### BACKGROUND ART

Future international standards related to the reduction of emissions of polluting gases produced by cars (the so-called "Euro5" and "Euro6" or "Tier2 Bin5" standards) cover a very low limit for NOₓ molecules which may be released into the atmosphere.

Respecting such limits is particularly critical, especially for Diesel engines; for such a reason, it has been suggested to equip the exhaust system of a Diesel engine with a further SCR (Selective Catalytic Reduction) catalyser adapted to convert NOₓ (NO₂ or NO) molecules into nitrogen (N₂), which is an inert gas, and water (H₂0). The reaction of reducing NOₓ molecules into nitrogen (N) is difficult to be obtained without the use of an appropriate reducing agent, which is generally identified in ammonia (NH₃). The reducing agent must be injected into the exhaust system and upstream of the SCR catalyser so as to be mixed with the exhaust gases before entering the SCR catalyser.

However, storing ammonia inside a car is not advisable due to evident safety reasons related to the fact that ammonia is toxic. Therefore, it has been suggested to store and inject an aqueous urea solution, because urea breaks down into ammonia due to the exhaust gas heat and also in part due to catalysis.

For injecting the aqueous urea solution upstream of the SCR catalyser, it has been suggested to use an electromagnetic injector completely equivalent to the electromagnetic injectors currently used for injecting fuel into internal combustion engines. In this manner, existing components of proven efficiency and reliability may be used, and thus there is no need to develop new components, with evident saving of both costs and time. Specifically, an injection device which comprises a tank containing the aqueous urea solution and a pump which draws the pressurized aqueous urea solution from the tank to feed the electromagnetic injector by means of a feeding pipe, is used.

A problem related to the injection of an aqueous urea solution into the exhaust system relates to the fact that the urea breakdown also determines the formation of isocyanic acid (HNCO), which may thicken and polymerize and thus be deposited on the internal walls of the exhaust system, which are arranged close to the electromagnetic injector, thus forming solid foulings which are difficult to be removed. In order to avoid the polymerization of the isocyanic acid produced by the urea breakdown, it has been suggested to insert a passive mixer into the exhaust system and close to the urea injection area, which passive mixer prevents the localized thickening of the isocyanic acid and thus prevents the polymerization of the isocyanic acid itself by forming turbulences in the exhaust gases. However, it has been observed that the action of the passive mixer is not able to appropriately prevent the formation of solid foulings on the internal walls of the exhaust system which are arranged close to the electromagnetic injector.

### DISCLOSURE OF INVENTION

It is the object of the present invention to provide an injection system for injecting a reducing substance into an exhaust system of an internal combustion engine, which injection system is easy and cost-effective to be constructed, is free from the above-described drawbacks and, in particular, has no formation of solid foulings on the internal walls of the exhaust system which are arranged close to the injector.

According to the present invention, an injection system for injecting a reducing substance into an exhaust system of an internal combustion engine is provided as claimed in the appended claims.

### BRIEF DESCRIPTION OF THE DRAWINGS

The present invention will now be described with reference to the accompanying drawings, which illustrate some non-limitative embodiments thereof, in which:
- figure 1 is a diagrammatic view of an exhaust system of an internal combustion engine provided with exhaust gas post-treatment, and comprising an injection system for injecting a reducing substance made in accordance with the present invention;
- figure 2 is a diagrammatic, side section view of a connecting tube of the injection system in figure 1;
- figure 3 is a diagrammatic, perspective view of the connecting tube in figure 2; and
- figure 4 is a diagrammatic, side section view of a constructional variant of the connecting tube in figure 2.

### PREFERRED EMBODIMENTS OF THE INVENTION

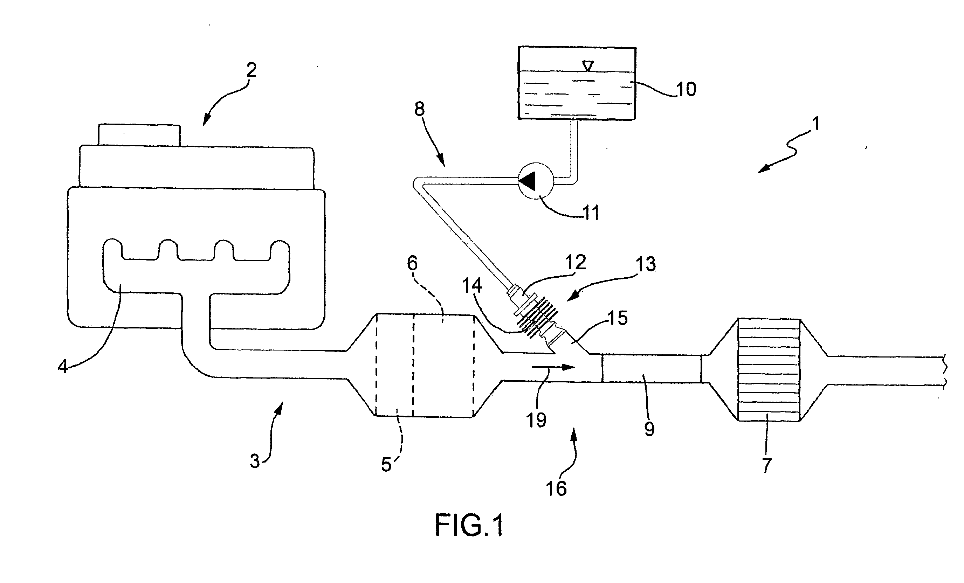

In figure 1, numeral 1 indicates as a whole an exhaust system of an internal combustion engine 2 working according to the "Diesel" cycle (i.e. fed with diesel fuel or the like).

The exhaust system 1 emits the gases produced by the combustion into the atmosphere and comprises an exhaust pipe 3 which departs from an exhaust manifold 4 of the internal combustion engine 2. An oxidizing catalyser 5 and a particulate filter 6 are arranged along the exhaust pipe 3; in figure 1, the oxidizing catalyser 5 and the particulate filter 6 are arranged one after the other within a same, common tubular container.

Furthermore, an SCR (Selective Catalytic Reduction) catalytic system 7 for post-treating NOₓ (NO and NO₂) molecules is arranged along the exhaust pipe 3 and downstream of the oxidizing catalyser 5. The SCR catalytic system 7 may comprise a single SCR catalyser 7, as shown in figure 1, or may comprise a set (normally three) of catalysers, which jointly optimize the SCR function for post-treating NOₓ molecules.

An injection system 8 is coupled with the exhaust pipe 3 immediately upstream of the catalytic system 7, which injection system 8 is adapted to inject a reducing additive, and specifically an aqueous urea solution (i.e. a solution of urea and water) into the exhaust pipe 3 itself. In use, due to the heat of the exhaust gases inside the exhaust pipe 3, the urea injected into the exhaust pipe 3 itself spontaneously breaks down into isocyanic acid (HNCO) and ammonia (NH₃), which ammonia works as a reducing agent within the catalytic system 7 to promote the breakdown reaction of NOₓ molecules into nitrogen (N₂) and water (H₂O).

A static mixer 9 is inserted along the exhaust pipe 3 and at the injection system 8, which static mixer serves the function of generating turbulences in the exhaust gases inside the exhaust pipe 3, so as to prevent the localized thickening of the isocyanic acid (which is formed during the urea breakdown) and thus to prevent the polymerization of the isocyanic acid itself and so as to increase the efficiency of the catalytic system 7, by making the dispersion of ammonia in the exhaust gases more homogenous. In the embodiment shown in figure 1, the static mixer 9 is arranged downstream of the injection system 8; alternatively, the static mixer 9 could be arranged upstream of the injection system 8.

The injection system 8 comprises a tank 10 containing the aqueous urea solution, and a pump 11 which draws the pressurized aqueous urea solution from the tank 10 to feed an electromagnetic injector 12 adapted to inject the pressurized aqueous urea solution into the exhaust pipe 3. The electromagnetic injector 12 is fixed to the exhaust pipe 3 by means of an mounting device 13 which comprises a tubular supporting body 14, which is made of thermally conductive material (typically steel), accommodates the electromagnetic injector 12 therein, and at a lower end thereof is adapted to be butt-coupled with a tubular appendix 15 which laterally and obliquely protrudes from a connecting tube 16 which forms a part of the exhaust pipe 3. The connecting tube 16 is adapted to allow a flow of exhaust gas therein, is arranged upstream of the catalytic system 7, and forms a part of the exhaust pipe 3 which originates from the exhaust manifold 4 of the internal combustion engine 2.

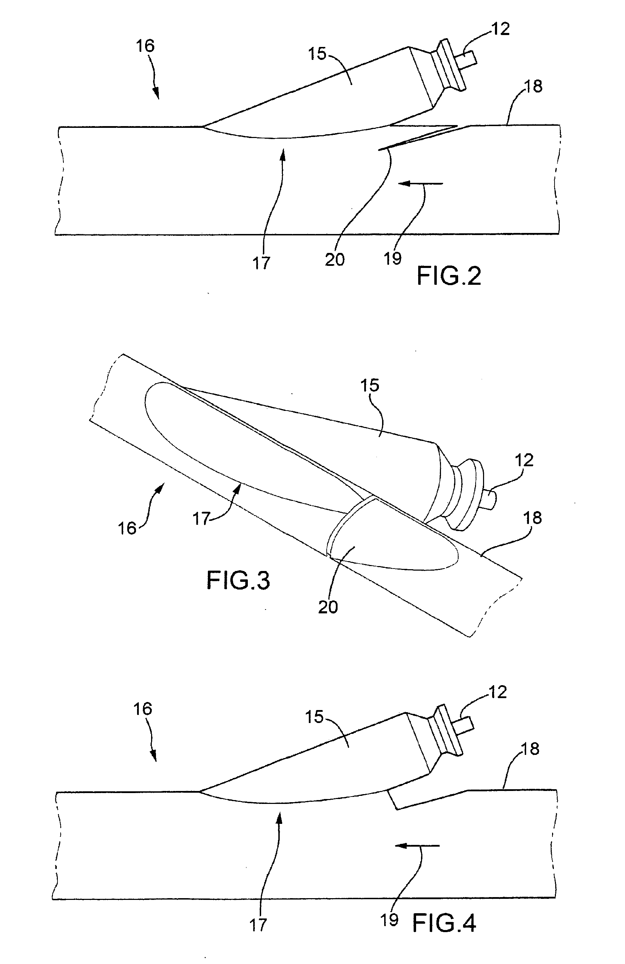

As shown in figure 2, at the intersection with the tubular appendix 15, the connecting tube 16 has a through feeding aperture 17 obtained through a side wall 18 of the connecting tube 16; the electromagnetic injector 12 injects the aqueous urea solution into the connecting tube 16 through the through feeding aperture 17. In other words, the connecting tube 16 has the tubular appendix 15, which is arranged at the feeding aperture 17, overhangingly originates from the side surface of the connecting tube 16 itself, and accommodates the injector 12 at an opposite end of the feeding aperture 17.

The connecting tube 16 has a reduction of its cross section for introducing exhaust gases at the through feeding aperture 17 obtained through the side wall 18 of the connecting tube 16. According to a preferred embodiment, the connecting tube 16 has a minimum cross section for introducing exhaust gases close to a starting point of the feeding aperture 17 with respect to the advancing direction 19 of the exhaust gases; specifically, the connecting tube 16 has a minimum cross section for introducing exhaust gases at a starting point of the feeding aperture 17 with respect to the advancing direction 19 of the exhaust gases.

According to the embodiment shown in figures 2 and 3, the reduction of the cross section for introducing exhaust gases into the connecting tube 16 is obtained by means of a fin 20 inserted into the connecting tube 16. According to the embodiment shown in figure 4, the reduction of the cross section for introducing exhaust gases into the connecting tube 16 is obtained by deforming the side wall 18 of the connecting tube 16.

According to a preferred embodiment shown in figures 2-4, the tubular appendix 15 is inclined with respect to the connecting tube 16 so as to form an acute angle (approximately 20°-40°) with the advancing direction 19 of the exhaust gases and the tubular appendix 15 has a progressively increasing cross section from the end in which the injector 12 is accommodated to the through feeding aperture 17.

In virtue of the reduction of the cross section for introducing exhaust gases of the connecting tube 16 at the feeding aperture 17, the exhaust gases which flow through the connecting tube 16 must locally increase their advancing speed and accordingly reduce their pressure at the feeding aperture 17. Such a pressure reduction of the exhaust gases which flow through the connecting tube 16 at the feeding aperture 17 (originated by the reduction of the cross section for introducing exhaust gases of the connecting tube 16) attracts the urea injected by the injector 12 towards the centre of the connecting tube 16 and therefore away from the side wall 18 of the connecting tube 16; in this manner, the isocyanic acid (HNCO) formed by the breakdown of the urea injected by the injector 12 is mixed with the exhaust gases and thus flows downstream of the connecting tube 16 and is not deposited on the side wall 18 of the connecting tube 16 (or worse, on the side wall of the tubular appendix 15).

As previously mentioned, according to a preferred embodiment, the tubular appendix 15 has a cross section gradually increasing from the end in which the injector 12 is accommodated to the through feeding end 17; in this manner, the pressure of the urea injected by the injector 12 tends to progressively increase from the end in which the injector is accommodated 12 to the through feeding aperture 17, and is thus relatively high at the through feeding aperture 17. Therefore, the relatively high pressurized urea which is at the through feeding aperture 17 tends to go towards the connecting tube 16 which has a reduced pressure and is not deposited on the side wall of the tubular appendix 15.

The above-described mounting device 13 has many advantages because it is simple and cost-effective to be constructed (in other words, it has minimum differences as compared to a similar, known mounting device), is particularly tough (thus has a very long working life and a very low risk of failures) and, above all, allows to achieve an effective mixing of urea and its components with the exhaust gases, thus avoiding the formation of solid foulings on the side wall 18 of the connecting tube 16 and on the side wall of the tubular appendix 15.

## Claims

1. An injection system (8) for injecting a reducing substance into an exhaust system (1) of an internal combustion engine (2); the injection system (8) comprises:
a connecting tube (16), which is adapted to allow a flow of exhaust gas therein, is arranged upstream of at least one catalytic system (7), and forms a part of an exhaust pipe (3) which originates from an exhaust manifold (4) of the internal combustion engine (2); and
an injector (12), which is coupled with the connecting tube (16) for injecting an additive into the connecting tube (16) itself through a through feeding aperture (17) obtained through a side wall (18) of the connecting tube (16);
the injection system (8) is **characterized in that** the connecting tube (16) has a reduction of its cross section for introducing exhaust gases at the through feeding aperture (17) obtained through the side wall (18) of the connecting tube (16).

2. An injection system (8) according to claim 1, wherein the connecting tube (16) has a minimum cross section for introducing exhaust gases close to a starting point of the feeding aperture (17) with respect to the advancing direction (19) of the exhaust gases.

3. An injection system (8) according to claim 2, wherein the connecting tube (16) has a minimum cross section for introducing exhaust gases at a starting point of the feeding aperture (17) with respect to the advancing direction (19) of the exhaust gases.

4. An injection system (8) according to claim 1, 2 or 3, wherein the reduction of the cross section for introducing exhaust gases into the connecting tube (16) is obtained by deforming the side wall (18) of the connecting tube (16).

5. An injection system (8) according to claim 1, 2 or 3, wherein the reduction of the cross section for introducing exhaust gases into the connecting tube (16) is obtained by means of a fin (20) inserted into the connecting tube (16).

6. An injection system (8) according to any one of the claims from 1 to 5, wherein the connecting tube (16) has the tubular appendix (15), which is arranged at the feeding aperture (17), overhangingly originates from the side surface of the connecting tube (16) itself, and accommodates the injector (12) at an opposite end of the feeding aperture (17).

7. An injection system (8) according to claim 6, wherein the tubular appendix (15) is inclined with respect to the connecting tube (16) so as to form an acute angle with the advancing direction (19) of the exhaust gases.

8. An injection system (8) according to claim 6 or 7, wherein the tubular appendix (15) has a cross section progressively increasing from the end in which the injector (12) is accommodated to the through feeding aperture (17).
